# EUROPEAN PATENT APPLICATION

(11) **EP 4 656 689 A1**
(43) Date of publication of application: **03.12.2025**
(21) Application number: 24194870.2
(22) Date of filing: 16.08.2024
(51) Int. Cl.: C09D 5/02, C09D 7/63, C09D 191/06

(54) **ANTI-STATIC COATING COMPOSITIONS**

(30) Priority: 28.05.2024 PT 2024119495
(71) Applicant: Chemitek - Química Avançada, S.A, 4740-010 Esposende (PT)
(72) Inventor: DE SÁ MARTINS, César André, 4740-010 Esposende (PT); MONTEIRO FARIA, Clara Sofia, 4740-010 Esposende (PT)
(74) Representative: Patentree

(57) **Abstract**

The present disclosure relates to anti-static coating compositions formulated to dissipate static electricity effectively, thereby preventing the accumulation of dust and other particles that can adhere to static-charged non-porous surfaces, such as solar glass, and other glasses. By preventing the build-up of static electricity, the coating compositions described in the present disclosure ensure that dust and other particles do not adhere to these surfaces, thereby maintaining cleanliness and functional properties.

## Description

### TECHNICAL FIELD

The present disclosure pertains to the field of anti-static compositions for coating non-porous surfaces, namely, to dissipate static electricity effectively, thereby preventing the accumulation of dust and other particles that can adhere to static-charged non-porous surfaces, such as solar glass, and other glasses.

### BACKGROUND

Non-porous surfaces such as glass are prone to static charge accumulation, which attracts dust and particulate matter, adversely affecting their performance in solar panels and in the appearance and functionality of other glasses used in various industries.

Non-porous surfaces, such as glass, particularly solar glass, are prone to accumulating static electricity. This static charge attracts dust and other particles, leading to surface contamination that can affect performance and transparency. For instance, static-charged solar panels can experience reduced efficiency due to dust accumulation. Similarly, in the electronics industry, static-charged display screens can attract dust, leading to poor visibility and functionality.

Traditional methods to mitigate static electricity, such as the use of anti-static coating compositions in the form of spray, often prove to be insufficient and temporary, necessitating frequent reapplication. In addition, the anti-static coating compositions disclosed in prior art documents contain harmful chemicals that raise environmental concerns and/or are incompatible with various non-porous surfaces. Therefore, there is a need for an improved anti-static coating composition that can provide long-lasting static dissipation for non-porous surfaces, ensuring both cleanliness and enhanced performance.

Therefore, there is a need for an improved anti-static coating composition that provides long-lasting static dissipation for non-porous surfaces, ensuring both cleanliness and enhanced performance for prolonged periods without compromising their inherent properties, such as transparency and optical clarity.

These facts are disclosed in order to illustrate the technical problem addressed by the present disclosure.

### GENERAL DESCRIPTION

The present disclosure relates to anti-static coating compositions formulated to dissipate static electricity effectively, thereby preventing the accumulation of dust and other particles that can adhere to static-charged non-porous surfaces, such as solar glass, and other glasses. By preventing the build-up of static electricity, the coating compositions described in the present disclosure ensure that dust and other particles do not adhere to these surfaces, thereby maintaining cleanliness and functional properties.

The long-lasting anti-static properties of the disclosed anti-static coating composition significantly reduce the need for frequent cleaning and maintenance of non-porous surfaces such as solar glass. This leads to improved efficiency and performance of such surfaces, particularly in solar panels where cleanliness is crucial for optimal energy conversion.

The disclosed anti-static coating compositions surprisingly provide improved static dissipation, presenting anti-static values below 0.18 kilovolt; preferably below 0.144 kilovolt; preferably below 0.097 kilovolt; more preferably below 0.060 kilovolt.

The disclosed anti-static coating compositions have optimized long-lasting anti-static properties and enable the reduction of maintenance needs, improve surface cleanliness and efficiency while maintaining the transparency, optical properties, and durability of the non-porous surfaces.

The disclosed anti-static coating composition maintains the inherent properties of the non-porous surfaces, including transparency and optical clarity, ensuring that the visual and functional aspects are not compromised.

In an embodiment of the present disclosure the anti-static composition herein described comprises water, preservative, paraffin wax, and ethoxylated C10 alcohol.

In an embodiment of the present disclosure the anti-static composition herein described comprises water, preservative, polyethylene wax, ethoxylated C10 alcohol, and ester of ethanaminium, 2-hydroxy-N,N-bis(2-hydroxyethyl)-N-methyl (CAS No.:157905-74-3).

In an embodiment of the present disclosure the anti-static composition herein described comprises a mix of sugar cane wax and polyethylene wax, polypropylene emulsion and preservative.

In an embodiment of the present disclosure the anti-static composition herein described comprises water, preservative, paraffin wax (such as, for example oxidized Fischer-Tropsch wax (CAS No.: 2658498-20-3)), and ethoxylated C10 alcohol.

In another aspect of the present disclosure, a solar panel or coated glass comprises the anti-static coating composition described herein.

In another aspect of the present disclosure, the anti-static composition may comprise 30% - 60% (w/w) of a wax and at least 0.1% (w/w) of a preservative.

An aspect of the present disclosure relates to an anti-static coating composition comprising 30% - 60% (w/w) of a wax; and 40% - 65% (w/w) of an aqueous solvent; wherein the wax is selected from a list consisting of: polyethylene wax (CAS number: 9002-88-4), sugar cane wax, paraffin wax (such as, for example oxidized Fischer-Tropsch wax (CAS No.: 2658498-20-3)), polypropylene wax (CAS number: 9003-07-0), or mixtures thereof to improve the anti-static effect, resistance, and stability of non-porous surfaces, such as glass, more preferably solar panels.

In an embodiment for better results, the anti-static composition of the present disclosure comprising 50% - 65% (w/w) of the aqueous solvent, preferably 58% - 59%(w/w) of the aqueous solvent; wherein the aqueous solvent is water.

In an embodiment for better results, the anti-static composition of the present disclosure comprising 35% - 55% (w/w) of a wax; preferably 38% - 53% (w/w) of a wax; more preferably 40% - 49.9% (w/w) of a wax.

In an embodiment for better results, the wax may be selected from a list consisting of: polypropylene wax (CAS number: 9003-07-0), polyethylene wax (CAS number: 9002-88-4) and/or sugar cane wax; preferably a wax emulsion.

In an embodiment for better results, the wax emulsion may comprise 30% - 40% (w/w) of polypropylene wax (CAS number: 9003-07-0) and 60% - 70% (w/w) of water.

In an embodiment for better results, the anti-static composition of the present disclosure may further comprise an ester as an additive, wherein the ester is a C16-C18 esters and/or unsaturated C18 ester; preferably ethanaminium, 2-hydroxy-N,N-bis(2-hydroxyethyl)-N-methyl (CAS No.:157905-74-3) to improve the anti-static effect, resistance, and stability of non-porous surfaces, such as glass.

In an embodiment for better results, the anti-static composition of the present disclosure may comprise from 0.01 - 2 % (w/w) of an ester, preferably 0.5 - 1% (w/w).

In an embodiment for better results, the anti-static composition of the present disclosure further comprising at least one of the following components: preservative, a tensioactive (or surfactant), stabilizer (namely UV stabilizer), binder or mixtures thereof.

In an embodiment for better results, the anti-static composition of the present disclosure comprising 0.4 % - 2% (w/w) of a tensioactive; and/or at least 0.1% (w/w) of a preservative.

In an embodiment for better results, the anti-static composition of the present disclosure comprising 0.3% - 1% (w/w) of the tensioactive; and/or 0.5% - 2% (w/w) of the preservative.

In an embodiment for better results, the tensioactive is selected from a list comprising: 2-propylheptyl alcohol, ethoxylated (7 mol EO) (CAS No.: 160875-66-1) or ethoxylated alcohol; preferably the tensioactive is an ethoxylated alcohol.

In an embodiment for better results, the preservative is selected from a list comprising: methylisothiazolinone, benzisothiazolinone, chlorophenol, methylparaben, propylparaben, benzoic acid, benzalkonium chloride, or mixtures thereof.

In an embodiment for better results, the anti-static composition of the present disclosure comprising: 55% - 60% (w/w) of solvent, 39-45% (w/w) of wax and/or polymer wax, 0.4% - 0.6% (w/w) of tensioactive, and 0.1% - 0.2 % (w/w) of a preservative.

In an embodiment for better results, the composition may be diluted with water for final application with a dilution from 1 to 500 times, preferably 10 to 2000 times, more preferably from 100-1000 times.

An aspect of the disclosure comprises the use of the previous described embodiments for long-term static dissipation. Specifically for cure at room temperature, forming a robust, transparent layer that adheres well to non-porous surfaces, such as glass, and effectively dissipates static electricity and prevents the accumulation of dust and other particles.

Another aspect of the present disclosure relates to the use of the anti-static coating composition of the present disclosure as an enhancer of anti-static properties.

Another aspect of the present disclosure relates to a coated article comprising the anti-static coating composition of the present disclosure, where the said article is a glass, in particular a solar panel glass.

An aspect of the disclosure comprises the application of the previous described embodiments using conventional methods such as spraying, dipping, or brushing.

In another aspect of the disclosure, the previously described embodiments are applied by robots and tractors with brushes to clean solar panels or glass.

### BRIEF DESCRIPTION OF THE DRAWINGS

The following figures provide preferred embodiments for illustrating the disclosure and should not be seen as limiting the scope of invention.
**Figure 1****:** Photographic representation of the setup (FMX-004 Electrostatic Field meter) used to perform the evaluation of the anti-static capacity of the embodiments of the anti-static coating composition of the present disclosure.
**Figure 2****:** Photographic representation of an embodiment of the present disclosure applied in glass coating in triplicate and immersed in an acidic solution (pH=4).

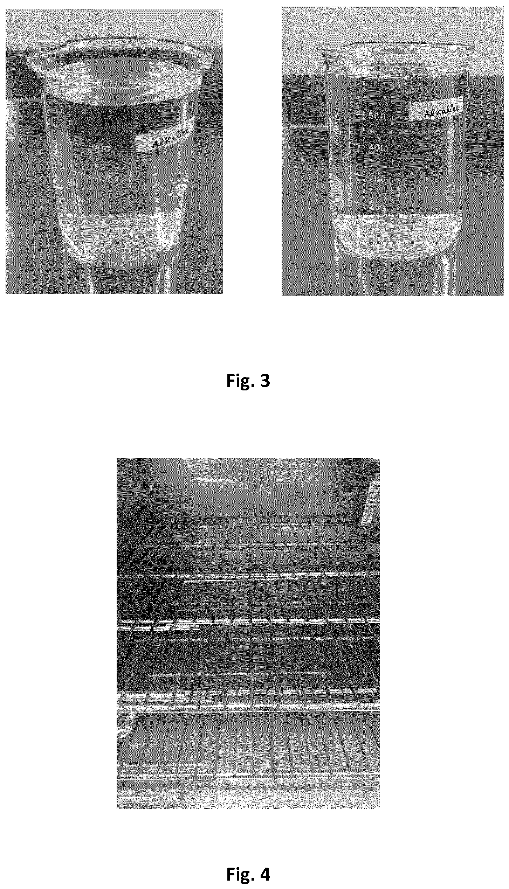

**Figure 3****:** Photographic representation of an embodiment of the present disclosure applied in glass coating in triplicate and immersed in an alkaline solution (pH=9).
**Figure 4****:** Photographic representation of glass coated with an embodiment of the present disclosure applied in triplicate and placed in an oven at 100 °C.
**Figure 5****:** Photographic representation of the embodiments of the present disclosure, representing examples 1, 2, 3, 4, 5, 6, and 7.
**Figure 6****:** Embodiment of transmittance results obtained from glasses coated with different embodiments of the present disclosure: Example 1, Example 2, Example 3, Example 4, Example 5, Example 6, Example 7, and uncoated sample (control).

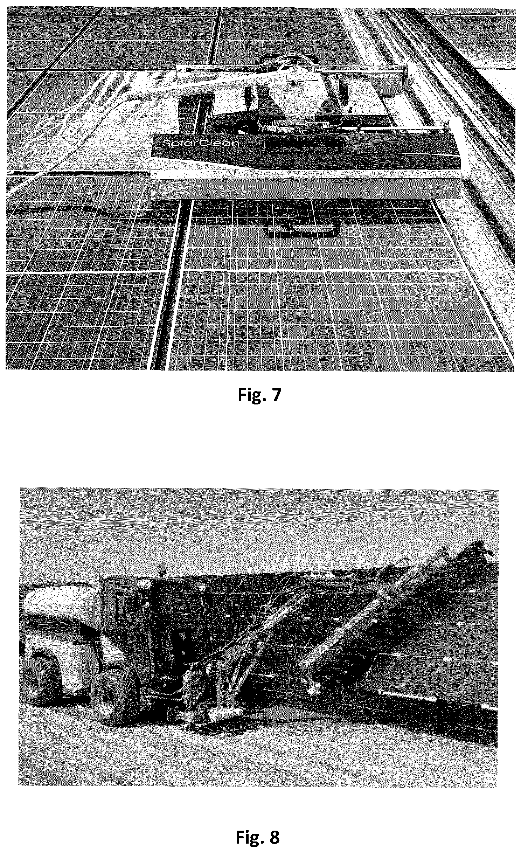

**Figure 7****:** Photographic representation of the use of the present disclosure by robot application in solar panels.
**Figure 8****:** Photographic representation of the use of the present disclosure by tractor with brush application in solar panels.

### DETAILED DESCRIPTION

The present disclosure relates to anti-static coating composition comprising 30% - 60% (w/w) of a wax; and 40% - 65% (w/w) of an aqueous solvent; wherein the wax is selected from a list consisting of: polyethylene wax (CAS number: 9002-88-4), sugar cane wax, paraffin wax (such as, for example oxidized Fischer-Tropsch wax (CAS No.: 2658498-20-3)), polypropylene wax (CAS number: 9003-07-0), or mixtures thereof. Furthermore, the present disclosure relates to an article comprising said anti-static coating composition and to a method to obtain said anti-static coating composition. The disclosed anti-static coating compositions offer an innovative solution to the problem of static electricity on non-porous surfaces. These compositions exhibit surprisingly long-lasting anti-static properties while maintaining surface transparency and durability, making these anti-static coating compositions a valuable advancement for applications such as solar glass, where cleanliness and efficiency are paramount.

### Examples composition

The following embodiments illustrate the disclosed anti-static coating compositions, the methods used to produce these compositions, and their applications. These examples are provided to facilitate an understanding of the present disclosure and to demonstrate the effectiveness of these compositions in addressing static electricity on non-porous surfaces.

In an embodiment, example 1 of the anti-static coating composition is as follows: 59.3% (w/w) water is added, then 0.2% (w/w) preservative is added and stirred, then 40% (w/w) of polyethylene wax (CAS No.: 9002-88-4) is added and stirred, and 0.5% (w/w) of ethoxylated alcohol is added and stirred for 20 minutes.

In an embodiment, example 2 of the anti-static coating composition is as follows: 58.3% (w/w) water is added, then 0.2% (w/w) preservative is added and stirred, then 40% (w/w) of polyethylene wax (CAS number: 9002-88-4) is added and stirred, followed by 0.5% (w/w) of ethoxylated alcohol and stirring. Lastly, 1% (w/w) of ethanaminium, 2-hydroxy-N,N-bis(2-hydroxyethyl)-N-methyl, esters with C16-18 and C18-unsaturated (CAS number: 157905-74-3) is added and stirred for 20 minutes.

In an embodiment, example 3 of the anti-static coating composition is as follows: 49.9% (w/w) of a mix of sugar cane (CAS number: 91722-22-4) wax and polyethylene wax (CAS number: 9002-88-4) (15% - 20 % (w/w) of each one of the wax and 60% - 70% (w/w) water), then 49.9% (w/w) of polypropylene wax emulsion (30% - 40% (w/w) of polypropylene (CAS number: 9003-07-0) in 60% - 70% (w/w) water), and 0.2% (w/w) of preservative is added and stirred for 20 minutes.

In an embodiment, example 4 of the anti-static coating composition is as follows: 59.3% (w/w) water is added, then 0.2% (w/w) preservative is added and stirred, followed by the addition of 40% (w/w) of Oxidized Fischer-Tropsch wax (CAS No.: 2658498-20-3) and stirring, and lastly 0.5% (w/w) of ethoxylated alcohol is added and stirred for 20 minutes.

In an embodiment, example 5 of the anti-static coating composition is as follows: 49.4% (w/w) of a mix of sugar cane wax (CAS number: 91722-22-4) and polyethylene wax (CAS number: 9002-88-4) (15% - 20 % (w/w) of each one of the wax and 60% - 70% (w/w) water), then 49.4% (w/w) of polypropylene wax emulsion (30% - 40% (w/w) of polypropylene (CAS number: 9003-07-0) in 60% - 70% (w/w) water), and 0.2% (w/w) of preservative is added, and lastly 1% (w/w) of ethanaminium, 2-hydroxy-*N*,*N*-bis(2-hydroxyethyl)-*N*-methyl, (CAS number: 157905-74-3) is added and stirred for 20 minutes.

In an embodiment, example 6 of the anti-static coating composition is as follows: 58.3% (w/w) water is added, then 0.2% (w/w) preservative is added and stirred, followed by the addition of 40% (w/w) of Oxidized Fischer-Tropsch wax (CAS No.: 2658498-20-3) and stirring, and lastly 0.5% (w/w) of ethoxylated alcohol as surfactant is added, and lastly, 1% (w/w) of ethanaminium, 2-hydroxy-*N,N*-bis(2-hydroxyethyl)-N-methyl(CAS number: 157905-74-3) is added and stirred for 20 minutes.

In an embodiment, example 7 of the anti-static coating composition is as follows: 58.3% (w/w) water is added, then 0.2% (w/w) preservative is added and stirred, then 40% (w/w) of polyethylene wax (CAS No.: 9002-88-4) is added and stirred, and 0.5% (w/w) of ethoxylated alcohol as surfactant is added, and lastly, 1% (w/w) of ethanaminium, 2-hydroxy-*N*,*N*-bis(2-hydroxyethyl)-*N*-methyl(CAS number: 157905-74-3) is added and stirred for 20 minutes.

In an embodiment the composition may be diluted with water for final application with a dilution from 1 to 500 times, preferably 10 to 2000 times, more preferably from 100-1000 times.

In an aspect of the disclosure, the anti-static performance of the disclosed anti-static coating composition was evaluated using specialized equipment to measure surface resistivity and static charge dissipation. The procedure used to evaluate the anti-static capacity of disclosed anti-static coating compositions described in detail below:

### Evaluation of anti-static capacity

To conduct anti-static tests, a Simco ION FMX-004 static field meter is utilized. This equipment allows for the measurement of the anti-static capacity of the disclosed anti-static coating compositions, as it provides information about the electrostatic field present on the surface of the analyzed material. Thus, lower values are associated with a higher rate of static charge dissipation and, therefore, better anti-static capacity; conversely, higher values indicate greater accumulation of static charges and lower dissipation rates, and consequently, are associated with inferior anti-static capacity.

For the disclosed anti-static coating compositions to be tested, these compositions must always be applied to the glass beforehand, with the respective dilutions already made.

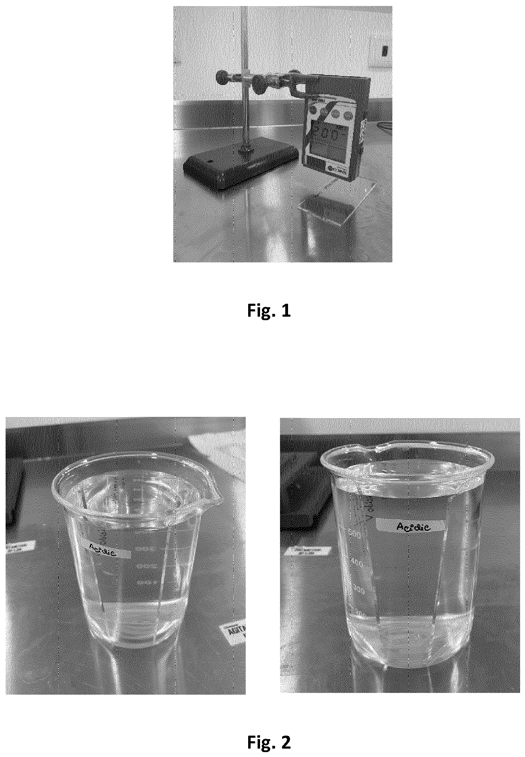

Since the ability of a material to dissipate static charges is influenced by external factors such as ambient temperature and humidity, it is necessary to conduct tests in a controlled environment. Therefore, before taking measurements, the dehumidifier should be turned on to prepare the environment. Generally, humidity should not exceed 60% and the temperature should be around 20°C to 25°C. The setup used to perform the measurements is shown in Fig. 1. Briefly, the procedure is as follows: Place the device fixed on the universal stand with the end containing the light emitting diode (LEDs) directed towards the surface where the glass to be analyzed will be placed; Determine the height at which the device is positioned; The surface of the material to be tested needed to be rubbed with a nylon cloth for about 30 seconds to create static charges on the surface; The glass was placed under the measuring device; and, Record the obtained value. For each sample, 20 measurements were taken.

The results of the procedure used to evaluate the anti-static capacity of the disclosed anti-static coating compositions are depicted on Table 1. The application of the disclosed anti-static coating compositions on glass demonstrated a significant reduction in static charge retention compared to uncoated glass surfaces, since the results were approximately zero (inferior to 0.18 kilovolt)

**Table 1. Embodiment of the static charge retention values for the different tested examples.**

| **Glass coated** | **Anti-static value [kilovolt (kV)]** |
|---|---|
| **Uncoated** | 0.310 |
| **Example 1** | 0.060 |
| **Example 2** | 0.097 |
| **Example 3** | 0.097 |
| **Example 4** | 0.144 |

### Stress tests

Various stress tests were conducted to simulate different environmental conditions to which solar panels are typically exposed, which may influence their performance. Below are the procedures for the three types of environmental stresses tested: acidic environment, alkaline environment, and high temperature.

### A) Resistance in acidic environment

A solution of phosphoric acid (H₃PO₄) was prepared (85% purity, manufacturer - RNM Chemicals) with a pH of approximately 4. The glass samples, previously coated (in triplicate) with their respective coatings were immersed in the prepared acidic solution. Photographs were taken of water droplets applied to the glass surface after approximately 2, 4, and 24 hours of acid exposure. At the end, the anti-static capability is evaluated using an electrostatic field meter (FMX-004 Electrostatic Field meter).

### B) Resistance in alkaline environment

A basic solution of sodium hydroxide (NaOH) (purity - 50%, manufacturer - RNM Chemicals) was prepared with a pH of approximately 9. The glass samples, previously coated (in triplicate) with their respective coatings were immersed in the prepared acidic solution. Photographs were taken of water droplets applied to the glass surface after approximately 2, 4, and 24 hours of acid exposure. At the end, the anti-static capability is evaluated using an electrostatic field meter (FMX-004 Electrostatic Field meter).

### C) High temperature resistance

The glass samples with their respective coatings applied were placed in an oven at a temperature of 100°C for 1 hour. Afterwards, photographs were taken of the glasses with water droplets applied on their surface. At the end, the anti-static capability is evaluated using an electrostatic field meter (FMX-004 Electrostatic Field meter).

| EXAMPLE 1 | |
|---|---|
| | Anti-static value [kilovolt (kV)] |
| Glass uncoated | 0.310 |
| Glass after coated | 0.060 |
| Resistance in alkaline environment | 0.295 |
| Resistance in acidic environment | 0.220 |
| High temperature resistance | 0.292 |

| EXAMPLE 2 | |
|---|---|
| | Anti-static value [kilovolt (kV)] |
| Glass uncoated | 0.310 |
| After application | 0.097 |
| Resistance in alkaline environment | 0.067 |
| Resistance in acidic environment | 0.142 |
| High temperature resistance | 0.186 |

| EXAMPLE 3 | |
|---|---|
| | Anti-static value [kilovolt (kV)] |
| Glass uncoated | 0.310 |
| After application | 0.097 |
| Resistance in alkaline environment | 0.128 |
| Resistance in acidic environment | 0.173 |
| High temperature resistance | 0.113 |

| EXAMPLE 4 | |
|---|---|
| | Anti-static value [kilovolt (kV)] |
| Glass uncoated | 0.310 |
| After application | 0.144 |
| Resistance in alkaline environment | -- |
| Resistance in acidic environment | -- |
| High temperature resistance | -- |

### Evaluation of the optical properties

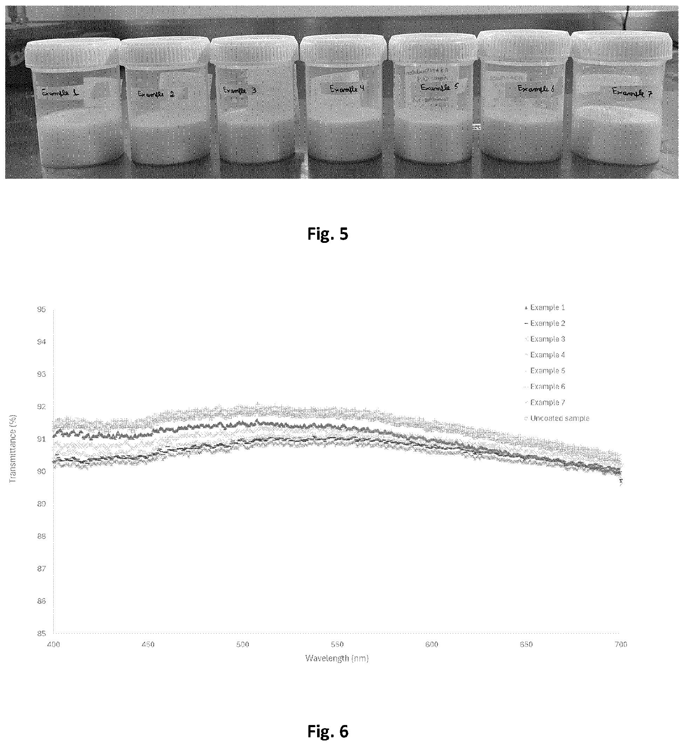

The spectra were acquired using a spectrophotometer from Shimadzu (model UV-2501PC). The baseline used for the acquisition of the UV-Vis spectra was performed without any glass sample in the holder, thus eliminating any interference that could affect the analysis and simulating the condition with 100% transmittance. Subsequently, the samples coated with the anti-static coating compositions of the present disclosure were placed in a dedicated solid sample holder, and the spectra were obtained in a wavelength range between 400 to 700 nm in transmittance mode. The optical properties evaluation reveals that after coating with the disclosed anti-static compositions the sample glass remains unaltered as observed in Fig. 6.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The disclosure should not be seen in any way restricted to the embodiments described and a person with ordinary skill in the art will foresee many possibilities to modifications thereof.

The above-described embodiments are combinable.

The following claims further set out particular embodiments of the disclosure.

## Claims

1. Anti-static coating composition comprising:
30% - 60% (w/w) of a wax; and
40% - 65% (w/w) of an aqueous solvent;
wherein the wax is selected from a list consisting of: polyethylene wax, sugar cane wax, paraffin wax, polypropylene wax, or mixtures thereof.

2. Composition according to the previous claims, comprising 50% - 65% (w/w) of the aqueous solvent, preferably 58% - 59%(w/w) of the aqueous solvent; more preferably wherein the aqueous solvent is water.

3. Composition according to any of the previous claims, comprising 35% - 55% (w/w) of a wax; preferably 38% - 53% (w/w) of a wax; more preferably 40% - 49.9% (w/w) of a wax.

4. Composition according to any of the previous claims, wherein the wax is selected from a list consisting of: polypropylene wax, polyethylene wax and/or sugar cane wax; preferably a wax emulsion.

5. Composition according to the previous claim, wherein the wax emulsion comprises 30% - 40% (w/w) of wax and 60% - 70% (w/w) of water.

6. Composition according to any of the previous claims, further comprising an ester as an additive, wherein the ester is a C16-C18 esters and/or unsaturated C18 ester; preferably ethanaminium, 2-hydroxy-N,N-bis(2-hydroxyethyl)-N-methyl.

7. Composition according to the previous claim comprising from 0.01 - 2 % (w/w) of an ester, preferably 0.5 - 1% (w/w).

8. Composition according to any of the previous claims, further comprising at least one of the following components: preservative, a tensioactive, stabilizer, binder or mixtures thereof.

9. Composition according to the previous claim, comprising 0.4 % - 2% (w/w) of a tensioactive; and/or at least 0.1% (w/w) of a preservative.

10. Composition according to any of the previous claims 8-9, comprising 0.3% - 1% (w/w) of the tensioactive; and/or 0.5% - 2% (w/w) of the preservative.

11. Composition according to any of the previous claims 8-10, wherein the tensioactive is selected from a list comprising: 2-propylheptyl alcohol, ethoxylated (7 mol EO) or ethoxylated alcohol; preferably the tensioactive is an ethoxylated alcohol.

12. Composition according to any of the previous claims 8 - 11, wherein the preservative is selected from a list comprising: methylisothiazolinone, benzisothiazolinone, chlorophenol, methylparaben, propylparaben, benzoic acid, benzalkonium chloride, or mixtures thereof.

13. Composition according to any of the previous claims, comprising: 55% - 60% (w/w) of solvent, 39-45% (w/w) of wax and/or polymer wax, 0.4% - 0.6% (w/w) of tensioactive, and 0.1% - 0.2 % (w/w) of a preservative.

14. Use of the coating composition described in any of the previous claims as an enhancer of anti-static properties.

15. Coated article comprising the anti-static coating composition according to any of the previous claims, wherein the article is a glass, in particular a solar panel glass.
